# EUROPÄISCHE PATENTSCHRIFT

(11) **EP 4 276 570 B1**
(45) Veröffentlichungstag und Bekanntmachung des Hinweises auf die Patenterteilung: **03.07.2024**
(21) Anmeldenummer: 22173164.9
(22) Anmeldetag: 13.05.2022
(51) Int. Cl.: G05D 23/13, F16K 31/60

(54) **VERSTELLEINHEIT FÜR EINE THERMOSTATKARTUSCHE**
ADJUSTING UNIT FOR A THERMOSTATIC CARTRIDGE
UNITÉ DE RÉGLAGE POUR UNE CARTOUCHE THERMOSTATIQUE

(43) Veröffentlichungstag der Anmeldung: 15.11.2023
(60) Teilanmeldung: 24172679.3
(73) Patentinhaber: Ideal Standard International NV, 1935 Zaventem (BE)
(72) Erfinder: Kaiser, Sebastian, 56843 Starkenburg (DE); Selzner, Christian, 54518 Bergweiler (DE)
(74) Vertreter: Feucker, Max Martin

(56) Entgegenhaltungen:
- EP-A1- 3 736 475
- WO-A1-2012/101049
- CH-A5- 648 390

## Beschreibung

Die vorliegende Erfindung betrifft ein sanitäres Thermostatmischventil mit einer Thermostatkartusche und einer Verstelleinheit. Die Erfindung betrifft zudem eine Sanitärarmatur, in der ein solches sanitäres Thermostatmischventil verbaut ist.

Die Thermostatkartusche umfasst in der Regel einen Heißwassereinlass, einen Kaltwassereinlass sowie einen Mischwasserauslass. Zwischen den Einlässen und dem Mischwasserauslass ist ein insbesondere als Dehnstoffelement ausgebildetes Thermostatelement angeordnet, welches in einem von dem Mischwasser durchflossenen Raum angeordnet ist. Das Thermostatelement ist einerseits mit einer Einstellhülse gekoppelt, welche den Zufluss von Heißwasser und Kaltwasser zu dem Mischwasserraum einstellt. Das Thermostatelement liegt andererseits an einem Anschlag an, dessen Lage von einem Benutzer eingestellt werden kann. Die Höhe der Mischwasser-Solltemperatur hängt somit von der Lage des Anschlags ab.

Die Thermostatkartusche weist eine Welle (welche auch als Spindel bezeichnet werden kann) auf, die mit dem Anschlag direkt oder indirekt gekoppelt ist und auf welche eine Verstelleinheit angebracht werden kann. Mit der Verstelleinheit kann die Welle betätigt werden und somit die Lage des Anschlags verändert werden. Hierzu weist die Verstelleinheit in der Regel einen Drehgriff auf, welcher drehfest mit der Welle verbunden ist und dadurch mit dem Anschlag der Thermostatkartusche gekoppelt ist. Insbesondere durch eine Drehbewegung des Drehgriffs kann somit die Lage des Anschlags mittels der Verstelleinheit verändert werden.

Die Verstelleinheit weist neben dem Drehgriff in der Regel weitere Bauteile auf, die so eingerichtet sind, dass mit dem Drehgriff eine Mischwassertemperatur zwischen einer minimalen Mischwassertemperatur (gegebenenfalls die Temperatur des Kaltwassers) und einer maximalen Mischwassertemperatur eingestellt werden kann. Die maximale Mischwassertemperatur ist dabei meist so gewählt, dass ein Benutzer sich nicht verbrühen kann. Andererseits ist es wünschenswert, dem Thermostatmischventil nachgelagerte sanitäre Einrichtungen regelmäßig mit Heißwasser zu spülen, um diese thermisch zu desinfizieren. Gleichzeitig soll aber auch eine Feineinstellung der Mischwassertemperatur möglich sein.

DE 10 2009 021 185 A1 offenbart ein sanitäres Thermostatmischventil mit den Merkmalen des Oberbegriffs des Anspruchs 1 und schlägt vor, den Drehgriff und einen Anschlagkörper in Drehrichtung beweglich zueinander zu lagern. Somit soll es ermöglicht werden, dass der Drehgriff über einen Drehwinkel von mehr als 360° verdreht werden kann, wenn eine möglichst hohe Mischwassertemperatur (gegebenenfalls Bereitstellung von ausschließlich Heißwasser) erreicht werden soll.

Weitere Verstelleinheiten sind aus EP 3 133 462 A1 und DE 195 45 587 A1 bekannt. Sanitäre Thermostatmischventile sind zudem jeweils aus WO 2012 101 049 A1 und CH 648 390 A5 bekannt. Die Thermostatkartuschen dieser Thermostatmischventile weisen Anschläge auf, die in spiralförmigen Führungsbahnen verstellbar gelagert sind.

Aufgabe der vorliegenden Erfindung ist es, die mit Bezug zum Stand der Technik geschilderten Nachteile zu beseitigen und insbesondere ein sanitäres Thermostatmischventil anzugeben, mit dem auf alternative Weise bei Bedarf eine hohe Mischwassertemperatur bereitgestellt werden kann, während gleichzeitig eine Feineinstellung der Mischwassertemperatur möglich ist.

Eine mögliche Lösung für diese Aufgabe ist mit dem sanitären Thermostatmischventil mit den Merkmalen des unabhängigen Anspruchs angegeben. Weitere Lösungen und vorteilhafte Weiterbildungen sind in der vorstehenden und nachfolgenden Beschreibung sowie in den abhängigen Ansprüchen angegeben, wobei einzelne Merkmale der vorteilhaften Weiterbildungen in technisch sinnvoller Weise miteinander kombinierbar sind.

Gelöst wird die Aufgabe insbesondere durch ein sanitäres Thermostatmischventil mit einer Verstelleinheit für eine Thermostatkartusche, welche einen Drehgriff, einen beweglich gelagerten Anschlagkörper und eine Führungsbahn für den Anschlagkörper umfasst. Die Erfindung zeichnet sich gegenüber dem Stand der Technik darin aus, dass die Führungsbahn schraubenförmig, beispielsweise an einer Außenumfangsfläche eines Bauteils der Verstelleinheit, oder spiralförmig, beispielsweise an einer axial ausgerichteten Fläche eines Bauteils der Verstelleinheit, ausgebildet ist. Dadurch, dass die Führungsbahn spiralförmig oder schraubenförmig ausgebildet ist, kann sich die Führungsbahn in Umfangsrichtung um mehr als 360° erstrecken.

Mit anderen Worten: Die Erfindung sieht in ihrem Grundgedanken vor, dass eine Führungsbahn für einen Anschlagkörper nicht rein kreisbogenförmig ausgebildet ist, sondern sich entweder zu einem Mittelpunkt einer Drehachse hin verjüngt (im Falle einer spiralförmigen Ausbildung der Führungsbahn) oder eine Steigung in axialer Richtung um die Drehachse (im Falle einer schraubenförmigen Ausbildung der Führungsbahn) aufweist. Somit ist es möglich, dass der Drehgriff über mehr als 360° gedreht wird, während der Anschlagkörper gleichzeitig in der Führungsbahn verbleibt. Somit ist eine Feineinstellung der Mischwassertemperatur möglich.

Der Drehgriff kann prinzipiell aus mehreren Bauteilen bestehen. Bevorzugt ist aber, dass der Drehgriff ein einteiliges Bauteil ist. Der Drehgriff ist dabei diejenige Baueinheit beziehungsweise dasjenige Bauteil, welche(s) von einem Benutzer für die Einstellung einer Solltemperatur betätigt wird.

In einer Ausführungsform kann die Führungsbahn an dem Drehgriff ausgebildet sein. In diesem Fall wäre der Anschlagkörper an einem anderen Bauteil der Verstelleinheit beweglich gelagert.

Bevorzugt ist jedoch, dass die Führungsbahn nicht an dem Drehgriff, sondern an einem anderen Bauteil der Verstelleinheit ausgebildet ist, zu welchem der Drehgriff während seiner Betätigung relativ verdreht wird. So ist bevorzugt vorgesehen, dass die Führungsbahn an einem Griffadapter ausgebildet ist, der drehfest mit einem Gehäuse einer Thermostatkartusche verbindbar ist, während der Drehgriff drehfest mit einer Welle zum Einstellen der Lage des Anschlags der Thermostatkartusche drehfest verbunden ist.

Erfindungsgemäß ist vorgesehen, dass der Anschlagkörper beweglich an dem einteiligen oder mehrteiligen Drehgriff angebracht ist. Bei einer Drehbewegung des Drehgriffs folgt der Anschlagkörper also dieser Drehbewegung, während er gleichzeitig relativ zu dem Drehgriff insbesondere in einer radialen oder axialen Richtung beweglich gelagert ist.

Der Anschlagkörper ist insbesondere so beweglich gelagert, dass er bei einer Drehbewegung des Drehgriffs aufgrund der Wechselwirkung mit der Führungsbahn eine Bewegung in radialer Richtung (wenn die Führungsbahn spiralförmig ausgebildet ist) oder in axialer Richtung (wenn die Führungs bahn schraubenförmig ausgebildet ist) ausführt. Der Anschlagkörper ist also in einer quer zu der Führungsbahn ausgerichteten ersten Richtung beweglich gelagert.

Es kann beispielsweise vorgesehen sein, dass die Führungsbahn als eine Nut ausgebildet ist, in welche der Anschlagkörper eingreift. Der Anschlagkörper kann mit einem nicht in die Nut eingreifenden Bereich auf einer Art Stift oder Träger insbesondere geradlinig beweglich gelagert sein, so dass er sich bei einer Drehbewegung des Drehgriffs relativ zu dem Lager bewegt.

Insbesondere ist vorgesehen, dass der Anschlagkörper auf einem Träger, wie einem Stift, verschiebbar gelagert ist, so dass der Anschlagkörper während einer Drehbewegung des Drehgriffs relativ zu dem Träger beweglich ist. In einer bevorzugten Ausführungsform ist der Träger an dem Drehgriff angebracht oder Bestandteil des Drehgriffs.

Die Führungsbahn weist bevorzugt an einem ersten Ende einen ersten Endanschlag und an einem zweiten Ende einen zweiten Endanschlag auf. Wenn der Anschlagkörper an dem ersten Endanschlag anliegt, so befindet sich die Verstelleinheit in einem Zustand, in dem beispielsweise die minimale Mischwassertemperatur eingestellt ist. Wenn der Anschlagkörper an dem zweiten Endanschlag anliegt, so befindet sich die Verstelleinheit insbesondere in einem Zustand, in dem die maximale Mischwassertemperatur, welche bevorzugt der Heißwassertemperatur entsprechen kann, eingestellt ist. Die Führungsbahn ist erfindungsgemäß so eingerichtet, dass der Drehgriff um mehr als 360°, bevorzugt um mehr als 420° verdreht werden muss, um den Anschlagkörper von dem einen Endanschlag zu dem anderen Endanschlag zu überführen. Da somit ein großer Drehwinkel zur Einstellung der Mischwassertemperatur zur Verfügung steht, kann die Mischwassertemperatur fein eingestellt werden.

Allerdings ist es wünschenswert, dass ein Benutzer die Mischwassertemperatur nur zwischen einer minimalen Mischwassertemperatur und einer Mischwassertemperatur einstellen kann, bei der sich der Benutzer nicht verbrüht. Hierzu wird vorgeschlagen, dass die Führungsbahn einen Zwischenanschlag aufweist, der zwischen dem ersten Endanschlag am ersten Ende und dem zweiten Endanschlag am zweiten Ende der Führungsbahn angeordnet ist. Bei einer Drehbewegung aus der Position für die Einstellung der minimalen Mischwassertemperatur zur Erhöhung der Mischwassertemperatur kann der Anschlagkörper an den Zwischenanschlag gelangen, so dass ohne eine weitere Betätigung eine Mischwassertemperatur eingestellt ist, die zwar hoch ist, aber bei der sich ein Benutzer nicht verbrüht. Damit eine höhere Mischwassertemperatur eingestellt werden kann, wird vorgeschlagen, dass ein Benutzer den Anschlagkörper manuell bewegen kann, so dass der Anschlagkörper an dem Zwischenanschlag vorbeigeführt werden kann. In diesem Zusammenhang ist insbesondere vorgesehen, dass der Anschlagkörper also nicht nur in einer quer zu der Führungsbahn ausgerichteten ersten Richtung beweglich gelagert ist, sondern auch in einer Richtung orthogonal dazu.

Wenn die Führungsbahn beispielsweise spiralförmig ausgebildet ist, so kann vorgesehen sein, dass der Anschlagkörper nicht nur in radialer Richtung zum Folgen der spiralförmigen Führungsbahn beweglich gelagert ist, sondern auch in axialer Richtung von einem Benutzer bewegt werden kann. Wenn die Führungsbahn hingegen schraubenförmig ausgebildet ist und der Anschlagkörper zum Folgen der schraubenförmigen Führungsbahn in axialer Richtung beweglich gelagert ist, kann vorgesehen sein, dass der Anschlagkörper in radialer Richtung von einem Benutzer bewegt werden kann.

In diesem Zusammenhang ist insbesondere vorgesehen, dass die Führungsbahn einen Zwischenanschlag aufweist, dessen Höhe geringer ist als die Endhöhe der Endanschläge. Somit kann der Anschlagkörper zum Überwinden des Zwischenanschlags aus der beispielsweise als Nut ausgebildeten Führungsbahn herausgehoben werden und bei einer gleichzeitig eingeleiteten Drehbewegung über den Zwischenanschlag gehoben werden. Der Anschlagkörper ist dann insbesondere so in der Höhenrichtung beweglich gelagert, dass er zwar über den Zwischenanschlag abgehoben werden kann, nicht aber über den Endanschlag.

Bei einer solchen Ausführungsform ist insbesondere vorgesehen, dass der Träger, auf dem der Anschlagkörper verschiebbar gelagert ist, von einem Benutzer betätigt werden kann, um den Zwischenanschlag zu überwinden. Der Träger ist insbesondere manuell anhebbar. Hierbei kann aber auch eine Mechanik vorgesehen sein, die eine Druckbetätigung in eine Anhebebewegung des Trägers übersetzt.

Die Erfindung findet insbesondere Anwendung in einer Sanitärarmatur, bei der insbesondere an einem Armaturenkörper ein Kaltwasseranschluss, ein Heißwasseranschluss und ein Mischwasseranschluss ausgebildet sind und welche ein Thermostatmischventil mit einer erfindungsgemäßen Verstelleinheit umfasst.

Die Erfindung sowie das technische Umfeld werden im Folgenden anhand der Figuren beispielhaft erläutert. Es zeigen schematisch
Figur 1: eine Explosionsansicht einer Verstelleinheit und eine Thermostatkartusche,
Figur 2: eine Aufsicht auf einen Griffadapter der Verstelleinheit,

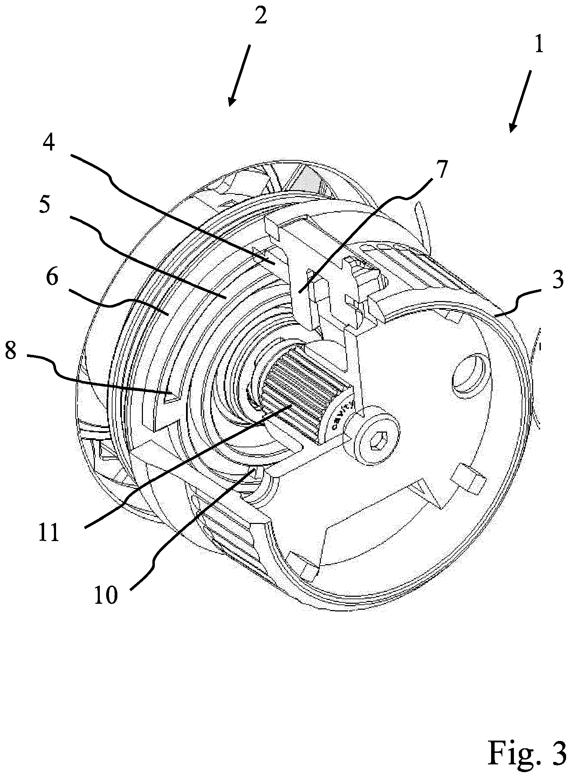

Figur 3: eine teilweise Schnittansicht durch die Verstelleinheit und

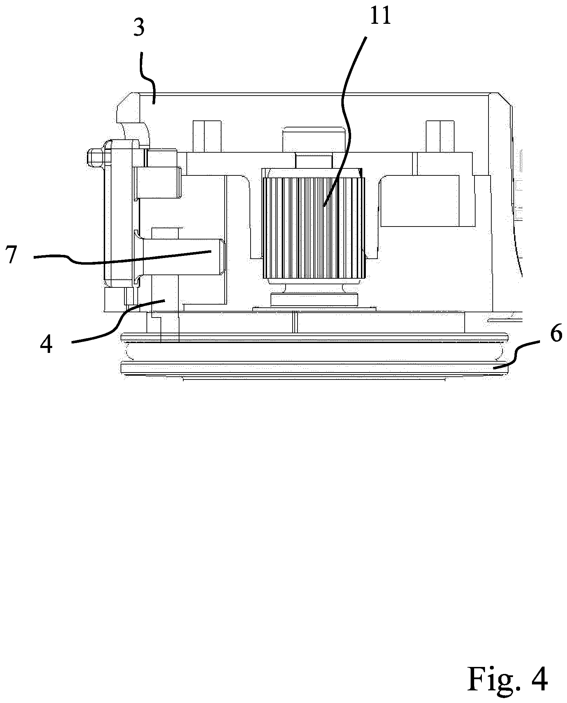

Figur 4: eine Schnittansicht durch die Verstelleinheit.

Das in den Figuren dargestellte sanitäre Thermostat-Ventil umfasst eine Verstelleinheit 1 und eine Thermostatkartusche 2.

Die Thermostatkartusche 2 weist ein Gehäuse 12 und eine Welle11 auf. In dem Gehäuse 12 ist ein Dehnstoffelement als Thermostatelement angeordnet, welches von einem Mischwasser umspült ist. Mit der Welle11 kann eine Lage eines Anschlags innerhalb der Thermostatkartusche eingestellt werden, wobei die Lage des Anschlags eine Mischwassertemperatur vorgibt.

Die Verstelleinheit 1 umfasst einen Griffadapter 6, der im montierten Zustand drehfest mit dem Gehäuse 12 verbunden ist, und einen Drehgriff 3, der im montierten Zustand drehfest mit der Welle 11 verbunden ist.

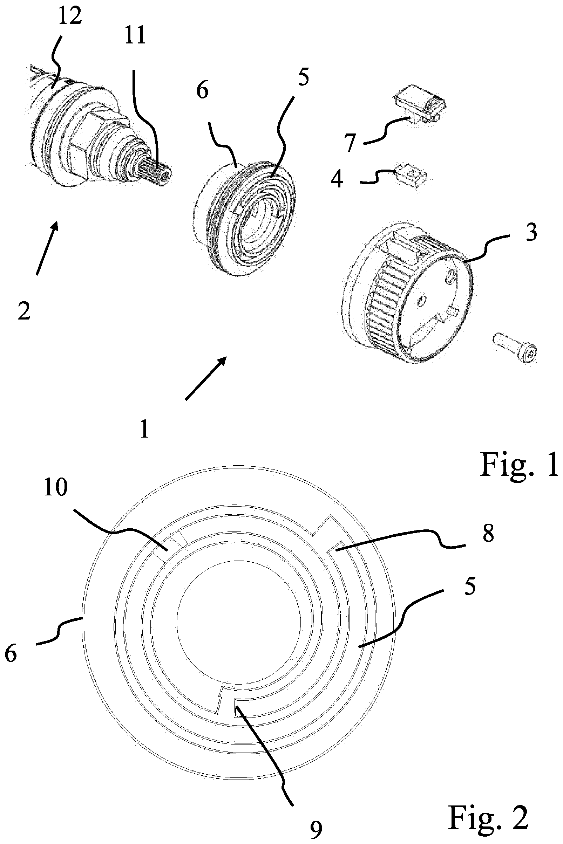

Der Griffadapter 6 weist auf seiner axial ausgerichteten, dem Drehgriff 3 zugewandten Seite eine Führungsbahn 5 auf. Die Führungsbahn 5 ist als Nut in dem Griffadapter 6 ausgebildet. Die Führungsbahn 5 ist spiralförmig geformt. Die Führungsbahn 5 weist einen ersten Endanschlag 8 und einen zweiten Endanschlag 9 an den Enden der Führungsbahn 5 auf. Die Endanschläge 8 und 9 weisen eine Höhe orthogonal zu der Zeichnungsebene der Figur 2 auf. Zwischen dem ersten Endanschlag 8 und dem zweiten Endanschlag 9 ist in der Führungsbahn 5 ein Zwischenanschlag 10 ausgebildet, dessen Höhe geringer ist als die Höhe der Endanschläge 8 und 9.

An dem Drehgriff 3 ist ein Anschlagkörper 4 beweglich gelagert. Hierzu ist an dem Drehgriff 3 ein Träger 7 vorgesehen, auf dem der Anschlagkörper 4 im montierten Zustand in radialer Richtung beweglich gelagert ist. Im montierten Zustand greift der Anschlagkörper 4 in die als Nut ausgebildete Führungsbahn 5 ein.

Wenn der Drehgriff 3 zum Verstellen des Anschlags der Thermostatkartusche 2 und somit zum Verstellen der Mischwassertemperatur gedreht wird, so befindet sich der Anschlagkörper 4 teilweise in der Führungsbahn 5, wobei der Anschlagkörper 4 in radialer Richtung auf den Träger 7 aufgrund der spiralförmigen Ausgestaltung der Führungsbahn 5 verschoben wird. Wenn der Anschlagkörper 4 bei einer Drehbewegung in Anlage mit dem ersten Endanschlag 8 oder dem zweiten Endanschlag 9 gelangt, so kann der Drehgriff nicht weitergedreht werden. Da sich die Führungsbahn 5 aufgrund ihrer spiralförmigen Ausbildung über mehr als 360° in Umfangsrichtung erstreckt, ist eine Feineinstellung der Mischwassertemperatur möglich.

Der Träger 7 ist zudem in axialer Richtung beweglich an dem Drehgriff 3 gelagert. Gelangt der Anschlagkörper 4 bei einer Drehbewegung in Anlage mit dem Zwischenanschlag 10, so kann ein Benutzer den Träger 7 in axialer Richtung anheben und den Drehgriff 3 gleichzeitig weiterdrehen, so dass der Anschlagkörper 4 über den Zwischenanschlag 10 gehoben wird. Da der Träger 7 in axialer Richtung nicht mehr als die Höhe der Endanschläge 8 und 9 angehoben werden kann, ist sichergestellt, dass der Anschlagkörper 4 nicht über die Endanschläge 8 und 9 hinaus bewegt wird, gleichzeitig aber über den Zwischenanschlag 10 gehoben werden kann. Für einen Benutzer ist somit eine Zwischenstellung deutlich erkennbar, bei der eine hohe, aber nicht zu hohe Mischwassertemperatur vorliegt. Zum Desinfizieren kann der Anschlagkörper 4 mit dem zweiten Endanschlag 9 in Anlage gebracht werden, in welchem Fall eine möglichst hohe Mischwassertemperatur oder die Heißwassertemperatur vorliegt.

### Bezugszeichenliste

- 1: Verstelleinheit
- 2: Thermostatkartusche
- 3: Drehgriff
- 4: Anschlagkörper
- 5: Führungsbahn
- 6: Griffadapter
- 7: Träger
- 8: erster Endanschlag
- 9: zweiter Endanschlag
- 10: Zwischenanschlag
- 11: Welle
- 12: Gehäuse

## Patentansprüche

1. Sanitäres Thermostatmischventil mit
- einer Thermostatkartusche (2), umfassend
• ein Thermostatelement,
• einen Anschlag für das Thermostatelement, wobei eine Höhe einer Solltemperatur von der Lage des Anschlags abhängt, und
• eine Welle, die mit dem Anschlag direkt oder indirekt gekoppelt ist, und
- einer Verstelleinheit (1), wobei die Verstelleinheit (1)
• einen Drehgriff (3),
• einen Anschlagkörper (4) und
• eine Führungsbahn (5) für den Anschlagkörper (4) umfasst, und
wobei die Verstelleinheit (1) auf der Welle der Thermostatkartusche angebracht ist, wobei der Drehgriff (3) drehfest mit der Welle verbunden ist und dadurch mit dem Anschlag gekoppelt ist, so dass die Lage des Anschlags mittels der Verstelleinheit (1) veränderbar ist, **dadurch gekennzeichnet, dass**
die Führungsbahn (5) der Verstelleinheit (1) spiralförmig oder schraubenförmig ausgebildet ist und sich in Umfangsrichtung um mehr als 360° erstreckt.

2. Thermostatmischventil nach Anspruch 1, wobei der Anschlagkörper (4) in einer quer zu der Führungsbahn (5) ausgerichteten ersten Richtung beweglich gelagert ist.

3. Thermostatmischventil nach einem der vorhergehenden Ansprüche, wobei der Anschlagkörper (4) durch manuelle Betätigung relativ zu der Führungsbahn (5) und orthogonal zu einer quer zu der Führungsbahn (5) ausgerichteten ersten Richtung bewegbar ist.

4. Thermostatmischventil nach einem der vorhergehenden Ansprüche, wobei die Führungsbahn (5) zwischen einem ersten Ende und einem zweiten Ende einen Zwischenanschlag (10) aufweist.

5. Thermostatmischventil nach Anspruch 4, wobei die Führungsbahn (5) zumindest an einem Ende einen Endanschlag (8, 9) mit einer Endhöhe aufweist, wobei der Zwischenanschlag (10) eine Höhe aufweist, die geringer ist als die Endhöhe.

6. Thermostatmischventil nach einem der vorhergehenden Ansprüche, wobei der Anschlagkörper (4) beweglich an dem Drehgriff (3) angebracht ist.

7. Thermostatmischventil nach einem der vorhergehenden Ansprüche, wobei der Anschlagkörper (4) auf einem Träger (7) verschiebbar gelagert ist, so dass der Anschlagkörper (4) während einer Drehbewegung des Drehgriffs (3) relativ zu dem Träger (7) beweglich ist.

8. Thermostatmischventil nach Anspruch 7, wobei der Träger (7) manuell betätigbar ist.

9. Thermostatmischventil nach einem der vorhergehenden Ansprüche, wobei die Führungsbahn (5) an einem Griffadapter (6) ausgebildet ist, der drehfest mit der Thermostatkartusche (2) verbindbar ist.

10. Sanitärarmatur, umfassend zumindest
- einen Kaltwasseranschluss,
- einen Heißwasseranschluss,
- einen Mischwasseranschluss und
- ein sanitäres Thermostatmischventil nach einem der Ansprüche 1 bis 9.

## Claims

1. Sanitary thermostat mixer valve with
- a thermostat cartridge (2), comprising
• a thermostat element,
• a stop for the thermostat element, wherein a height of a target temperature is dependent on the position of the stop
and
• a shaft which is directly or indirectly connected to the stop, and
- an adjustment unit (1), wherein the adjustment unit (1) comprises
• a rotating handle 3),
• a stop element (4) and
• a guideway (5) for the stop element (4) and
wherein the adjustment unit (1) is arranged on the shaft of the thermostat cartridge, wherein the rotating handle (3) is connected in a rotationally fixed manner to the shaft and thereby connected to the stop so that the position of the stop can be changed by way of the adjustment unit (1), **characterised in that**
the guideway (5) of the adjustment unit (1) is designed in a spiral-shaped or screw-shaped manner and extends by more than 360° in the circumferential direction.

2. Thermostat mixer valve according to claim 1, wherein the stop element (4) is borne in a moveable manner in a first direction orientated perpendicularly to the guideway (5)

3. Thermostat mixer valve according to any one of the preceding claims, wherein the stop element (4) is moveable through manual operation relative to the guideway (5) and orthogonally to a first direction orientated perpendicularly to the guideway (5).

4. Thermostat mixer valve according to any one of the preceding claims, wherein between a first end and second end, the guideway (5) comprises an intermediate stop (10).

5. Thermostat mixer valve according to claim 4, wherein at least at one end, the guideway (5) comprises an end stop (8, 9) with an end height, wherein the intermediate stop (10) has a height that is less than the end height.

6. Thermostat mixer valve according to any one of the preceding claims, wherein the stop element (4) is arranged on the rotational handle (3) in a moveable manner.

7. Thermostat mixer valve according to any one of the preceding claims, wherein the stop element (4) is borne in a displaceable manner on a support (7), so that during a rotational movement of the rotational handle (3), the stop element (4) is moveable relative to the support (7).

8. Thermostat mixer valve according to claim 7, wherein the support (7) can be manually operated.

9. Thermostat mixer valve according to any one of the preceding claims, wherein the guideway (5) is arranged on a handle adapter (6) which can be connected to the thermostat cartridge (2) in a rotationally fixed manner.

10. Sanitary fitting comprising at least
- one cold water connection,
- one hot water connection,
- a mixed water connection and
- a sanitary thermostat mixer valve according to any one of claims 1 to 9.

## Revendications

1. Mitigeur thermostatique sanitaire, avec
- une cartouche thermostatique (2), comprenant
• un élément thermostatique,
• une butée pour l'élément thermostatique, un niveau d'une température de consigne dépendant de la position de la butée et
• un arbre, qui est accouplé directement ou indirectement avec la butée et
- une unité d'ajustage (1), l'unité d'ajustage (1) comprenant
• une poignée rotative (3),
• un organe de butée (4) et
• un trajet de guidage (5) pour l'organe de butée (4) et
l'unité d'ajustage (1) étant montée sur l'arbre de la cartouche thermostatique, la poignée rotative (3) étant assemblée de manière solidaire en rotation avec l'arbre et étant accouplée de ce fait avec la butée, de telle sorte que la position de la butée soit variable au moyen de l'unité d'ajustage (1), **caractérisé en ce que**
le trajet de guidage (5) de l'unité d'ajustage (1) est conçu en forme de spirale, ou de forme hélicoïdale et s'étend de plus de 360 ° dans la direction périphérique.

2. Mitigeur thermostatique selon la revendication 1, l'organe de butée (4) étant logé en étant mobile dans une première direction orientée à la transversale du trajet de guidage (5).

3. Mitigeur thermostatique selon l'une quelconque des revendications précédentes, l'organe de butée (4) étant mobile par actionnement manuel par rapport au trajet de guidage (5) et de manière orthogonale par rapport à une première direction orientée à la transversale du trajet de guidage (5).

4. Mitigeur thermostatique selon l'une quelconque des revendications précédentes, le trajet de guidage (5) comportant entre une première extrémité et une deuxième extrémité une butée intermédiaire (10).

5. Mitigeur thermostatique selon la revendication 4, le trajet de guidage (5) comportant sur au moins une extrémité une butée finale (8, 9) d'une hauteur finale, la butée intermédiaire (10) présentant une hauteur qui est inférieure à la hauteur finale.

6. Mitigeur thermostatique selon l'une quelconque des revendications précédentes, l'organe de butée (4) étant monté de manière mobile sur la poignée rotative (3).

7. Mitigeur thermostatique selon l'une quelconque des revendications précédentes, l'organe de butée (4) étant logé de manière déplaçable sur un support (7), de telle sorte que pendant un mouvement en rotation de la poignée rotative (3), l'organe de butée (4) soit mobile par rapport au support (7).

8. Mitigeur thermostatique selon la revendication 7, le support (7) étant actionnable manuellement.

9. Mitigeur thermostatique selon l'une quelconque des revendications précédentes, le trajet de guidage (5) étant conçu sur un adaptateur de poignée (6) qui est susceptible d'être assemblé de manière solidaire en rotation avec la cartouche thermostatique (2).

10. Robinetterie sanitaire, comprenant au moins
- un raccordement d'eau froide,
- un raccordement d'eau chaude,
- un raccordement d'eau mitigée,
- un mitigeur thermostatique sanitaire selon l'une quelconque des revendications 1 à 9.
